## Europäisches Patentamt

## European Patent Office

## Office européen des brevets

(19)

(11) Veröffentlichungsnummer: **0 151 713**
**B1**

(12) **EUROPÄISCHE PATENTSCHRIFT**

(45) Veröffentlichungstag der Patentschrift:
**12.08.87**

(21) Anmeldenummer: **84114360.5**

(22) Anmeldetag: **26.11.84**

(51) Int. Cl.⁴: **C 08 J 7/04,** C 09 D 3/72,
C 08 G 18/10

(54) **Haftfester Elastomerlack.**

(30) Priorität: **12.01.84 DE 3400852**

(43) Veröffentlichungstag der Anmeldung:
**21.08.85 Patentblatt 85/34**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
**EP-A-0 025 500**
**US-A-3 737 402**
**US-A-3 979 547**

(73) Patentinhaber: **Henkel Kommanditgesellschaft auf Aktien, Postfach 1100 Henkelstrasse 67, D-4000 Düsseldorf- Holthausen (DE)**

(72) Erfinder: **Özelli, Riza Nur, Dr., Stephanusstrasse 37, D-4040 Neuss (DE)**
Erfinder: **Lippert, Hartmut, Geschwister- Scholl- Strasse 61, D-4019 Monheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**0 151 713**

**Beschreibung**

Die Erfindung betrifft einen Polyurethanlack mit haftverbesserndem Zusatz für Elastomere.

Die Lackierung von Elastomeren mit Lacken auf Polyurethanbasis ist seit langem bekannt. Verwiesen sei beispielsweise auf G. Klement in Kautschuk und Gummi, Kunststoffe, Jahrgang 23 (1970), Heft 8, Seiten 375-378. Die dort beschriebenen Lacke dienen in erster Linie zur Erhöhung der Witterungsbeständigkeit empfindlicherer Elastomere und zur Glättung der Oberfläche. Lacke für Elastomere sollten daher besonders dann eingesetzt werden können, wenn das Elastomerteil langen Außenbewitterungszeiten und/oder mechanischer Belastung ausgesetzt ist. Es bestand daher ein Bedürfnis Elastomerlacke zu schaffen, die bessere Haftung auch zu unpolaren Elastomeren aufweisen. Dies gilt insbesondere für die vor kurzem bekanntgewordenen Gleitlacke, bei denen es sich um Polyurethanlack-Zubereitungen handelt, die kugelige Füllkörper enthalten, deren Dicke ein mehrfaches der Lackschichtdicke beträgt und die als Abstandshalter fungieren, wodurch die Reibung der lackierten Elastomeren z. B. gegenüber Glas herabgesetzt wird.

Aufgabe der Erfindung ist somit die Verbesserung der Haftfestigkeit und Wasserbeständigkeit von einkomponentigen Polyurethanlacken für Elastomere. Eine spezielle Aufgabe der Erfindung ist es, Gleitlacke für Elastomere bereitzustellen, die Abstandshalter, bevorzugt kugeliger Gestalt, enthalten. Eine ganz spezielle Aufgabe der Erfindung zielt darauf ab, einkomponentige Polyurethanlacke für Elastomere mit PVC-Kugeln eines mittleren Durchmessers zwischen 50 und 200 m als Abstandshalter und Gleitverbesserer bezüglich Haftfestigkeit und Wasserbeständigkeit zu verbessern.

Gegenstand der Erfindung sind daher feuchtigkeitshärtende 1-Komponenten-Polyurethanlacke zur Beschichtung von Elastomeren, bestehend aus mehrfunktionellen Isocyanatverbindungen, Lösungsmitteln, Hilfsstoffen und gewünschtenfalls Gleitfähigkeitsverbesserern, dadurch gekennzeichnet, daß als Haftverbesserer mehrfunktionelle aromatische Nitrosoverbindungen enthalten sind.

Die erfindungsgemäßen Lacke enthalten zur Verbesserung der Haftfestigkeit und der Wasserbeständigkeit mehrfunktionelle aromatische Nitrosoverbindungen. Derartige Verbindungen sind bereits bekannt. Sie werden in Bindemitteln zum Aufvulkanisieren von Kautschuk auf Metalle verwendet und beispielsweise in der deutschen Patentschrift 22 28 544 beschrieben. Die deutsche Offenlegungsschrift 31 25 286 nennt die Verwendung von aromatischen Nitrosoverbindungen in einem speziellen Klebstoff. Die Verbesserung der Haftfestigkeit und Witterungsbeständigkeit von Polyurethanlacken auf Elastomeren ist jedoch noch nicht bekannt, und aus der Verwendung in Bindemitteln, die bei erhöhten Temperaturen reagieren, nicht herzuleiten.

Die erfindungsgemäßen Lacke enthalten als mehrfunktionelle aromatische Nitrosoverbindung in erster Linie Dinitrosoverbindungen, in denen die Nitrosogruppen nicht an benachbarten C-Atomen angebracht sind. Geeignet sind Dinitrosoverbindungen ein- und mehrkerniger Aromaten. Besonders bevorzugt sind die Dinitrosoverbindungen substituierter oder unsubstituierter einkerniger Aromaten, so beispielsweise m-Di-nitrosobenzol, p-Di-nitrosobenzol, m-Di-nitrosonaphthaline, p-Di-nitrosonaphtalin, 2,5-Di-nitroso-p-cymol, 2-Methyl-1,4-di-nitrosobenzol, 2-Methyl-5-chlor-1,4-dinitrosobenzol, 2-Fluor-1,4-di-nitrosobenzol, 2-Methoxy-1,3-dinitrosobenzol, 5-Chlor-1,3-dinitrosobenzol, 2-Benzyl-1,4-dinitrosobenzol und 2-Cyclohexyl-1,4-dinitrosobenzol.

Unter den genannten Verbindungen ist 1,4-Dinitrosobenzol bevorzugt. Eingesetzt werden kann sowohl die reine chemische Substanz als auch 1,4-dinitrosobenzol-haltige Zubereitungen, so z. B. Aufschlämmungen der Substanz in Lösungsmitteln mit einem Aktivsubstanzgehalt von 30 - 40 %. Derartige Aufschlämmungen werden im Handel angeboten.

Die mehrfunktionellen aromatischen Nitrosoverbindungen werden in den Lacken in Mengen von 0,5 - 4 Gew.-%, bezogen auf die lösungsmittelfreien Lackharze, eingesetzt. Bevorzugt ist ein Bereich von 1 - 2,5 Gew.-%.

In einer bevorzugten Ausführungsform betrifft die Erfindung einkomponentige Polyurethangleitlacke für Elastomere. Derartige Gleitlacke enthalten als Gleitfähigkeitsverbesserer Feststoffe eines mittleren Durchmessers von 30 - 200 μm, vorzugsweise von 30-150 μm, die bevorzugt kugelige Gestalt haben.

Es ist bis jetzt nicht untersucht worden, worauf die Verminderung des Reibungskoeffizienten von Elastomeren, die mit derartigen Gleitlacken beschichtet sind, beruht. Es wird jedoch angenommen, daß nach Aushärten des Lackes die Festkörper über die Lackoberfläche hinausragen und als Abstandshalter zu einem vorbeigleitenden Substrat dienen. Die Erniedrigung des Reibungskoeffizienten wird somit zumindest teilweise durch eine Verringerung der Auflagefläche bewirkt. Da derartige Gleitlacke in einer Dicke von 10 - 50 μm aufgetragen werden, ist es bevorzugt Festkörper einzubauen, die einen Durchmesser von 30 - 150 μm haben.

Als Festkörper oder auch Abstandshalter eignen sich eine Vielzahl von Stoffen, die in kugeliger Form hergestellt werden können. So werden nach einer ersten Ausführungsform der Erfindung kugelige Polymerteilchen verwendet. Geeignet sind kugelige Polymerteilchen, die durch Suspensionspolymerisation hergestellt werden und die in ihrem Durchmesser wenigstens nährungsweise gleich groß sind. So können beispielsweise kugelige Polyolefine mit einem Teilchendurchmesser im o.g. Bereich eingesetzt werden. Geeignete Polyolefine sind Polyethylen, Polypropylen oder Polystyrol. Weiterhin geeignet sind kugelige Polymere auf Acrylatbasis. Geeignet ist beispielsweise kugeliges Polymethylmethacrylat. Weiter geeignet sind aber auch kugelige anorganische Mineralien wie z. B. anorganische Gläser in Kugelform oder Metallkugeln, beispielsweise Aluminiumkugeln jeweils im gewünschten Teilchendurchmesser. Bei der Auswahl eines geeigneten Materials für die Abstandshalter hat der Lackfachmann das Folgende zu beachten:

Bei Polymeren muß das Lacklösungsmittel ein Nichtlösungsmittel für das Polymer darstellen. Es sei hier auf die bekannten Tabellenwerke hingewiesen, in denen Lösungsmittel und Nichtlösungsmittel für Polymere zusammengestellt sind, z. B. auf J. Brandrup und E. Immergut, Polymer Handbook, J.Wiley & Sons, New York,

2

2.Ed.IV, 241(1975). Bei der Verwendung anorganischer Gläser als Abstandshalter muß bedacht werden, daß diese gegenüber vielen Substraten abrasiv wirken können. Gleitlacke mit kugeligen Glasteilchen werden daher eher für Spezialanwendungen geeignet sein. Die Verwendung von Metallen führt zu einem Metallglanzeffekt des lackierten Elastomeren.

Bevorzugte Abstandshalter im Sinne der Erfindung sind kugelige Teilchen chlorierter Polymerer, z. B. kugelige PVC-Teilchen. Hierbei bedeutet kugelig, daß die Teilchen zumindest größtenteils eine runde, kugelförmige oder elipsoide Oberfläche aufweisen, d.h. zumindest größtenteils frei von Spitzen und Kanten sind. Derartige PVC-Teilchen sind technisch leicht zugänglich, sie werden nach dem Verfahren der Suspensionspolymerisation hergestellt. Auf dem Gebiet der Suspensionspolymerisation, insbesondere von Vinylchlorid, existiert ein umfangreiches Fachwissen, das es erlaubt, Teilchen mit in weiten Grenzen variierbaren Größen und Größenverteilungen herzustellen. Für die Zwecke der vorliegenden Erfindung werden Teilchen mit einem mittleren Durchmesser zwischen 70 und 200 µm verwendet. Bevorzugt sind Teilchen mit einem Durchmesser von 30 - 150 µm. Die Verwendung kleinerer Teilchen führt zu einem Nachlassen der Gleiteigenschaften, wo hingegen bei Verwendung von Teilchen in einem Durchmesser von mehr als 200 µm die vorteilhaften Eigenschaften der lackierten Elastomerteile gewährleistet sind, jedoch die Verarbeitung der Lacke durch Spritzpistolen sehr schwierig wird.

Wenngleich kugelige PVC-Teilchen mit einer breiten Teilchengrößenverteilung, also Gemische zwischen Teilchen unterschiedlichen Durchmessers, als Abstandshalter im Sinne der Erfindung eingesetzt werden können, so ist es doch bevorzugt, Teilchen mit enger Teilchengrößenverteilung, also in etwa gleichgroße Teilchen zu verwenden. Großtechnisch nach dem Suspensionspolymerisationsverfahren hergestelltes PVC weist meist die geforderte enge Teilchengrößenverteilung auf und kann daher eingesetzt werden, wenn der mittlere Teilchendurchmesser im beanspruchten Bereich liegt.

Der Begriff PVC wird hier für Polyvinylchlorid gebraucht und umfaßt auch Copolymere des Vinylchlorids soweit sie überwiegend aus Vinylchlorid bestehen oder allgemein als PVC bezeichnet werden. Im Sinne der Erfindung besonders geeignete PVC-Typen sind beispielsweise das Produkt Vinoflex S6115 der Firma Wacker-Chemie sowie das produkt GEON 221 der Firma BF Goodrich

Diese Produkte zeigen die geforderte mittlere Teilchengröße nach einem vereinfachten, in der Lackindustrie üblichen Meßverfahren, bei den ein mit Pigmentkörnern gefüllter Lackfilm in einer genormten Vorrichtung von einer Schichtdicke von etwa 300 µm bis auf 0 ausgezogen wird und festgestellt wird, bei welcher Schichtdicke die Pigmentkörner die Lackoberfläche durchstoßen.

Die erfindungsgemäßen Lacke enthalten die als Abstandshalter gedachten Teilchen in einer Menge von etwa 10 Gew.-%, bezogen auf den lösungsmittelfreien Lack. Um den Charakter des Lackes als solches nicht zu verändern, wird der Fachmann nicht mehr als 25 und insbesondere nicht mehr als 35 oder gar 50 Gew.-% Festkörper, bezogen auf Lack, einsetzen. Bei weniger als 5 Gew.-% Festkörper, bezogen auf Lack, beginnen die Gleiteigenschaften allmählich nachzulassen. Ein bevorzugter Bereich ist daher zwischen 5 und 20 Gew.-%, insbesondere zwischen 7 und 15 Gew.-% Festkörper, bezogen auf Lack, anzusetzen.

Um günstige Gleiteigenschaften zu erreichen, müssen Kugeldicke und die Dicke der Lackschicht aufeinander abgestimmt werden. Zwar wird eine Verminderung des Reibungskoeffizienten beobachtet, wenn die Dicke der Lackschicht in dem weiten Bereich zwischen 5 und 50 % der Kugeldicke variiert wird, doch ist es bevorzugt, die Lackschichtdicke auf 10 bis 20 % der Kugeldicke einzustellen. Bevorzugte Lackschichtdicken liegen damit zwischen 7 und 40 µm, insbesondere zwischen 10 und 25 µm. Die Einstellung der Lackschichtdicke kann der Fachmann nach den übliche Methoden durchführen. So können Spritzdauer, Spritzmenge oder auch der Feststoffgehalt des Lackes variiert werden.

Die erfindungsgemäßen 1-komponentigen feuchtigkeitshärtenden Polyurethanlacke enthalten als Bindemittel Polyurethan-Prepolymere mit im Mittel zwei oder mehr Isocyanatgruppen pro Molekül. Derartige prepolymere sind wohl bekannt und werden auf vielen Gebieten eingesetzt. Sie können z. B. auch als Klebstoffe verwendet werden. Die Polyurethan-Prepolymeren werden hergestellt durch Vermischen von Alkoholen der Funktionalität 2 und größer mit einem Überschuß an Isocyanatverbindungen der Funktionalität 2 und größer. Dabei kann durch die Wahl der Einsatzmengen die Viskosität der Produkte bestimmt werden. Setzt man pro mol OH-Gruppen 2 mol NCO-Gruppen ein, so erhält man niedermolekulare, relativ dünnflüssige Mischungen. Nährt man das Verhältnis OH zu NCO der Äquivalenz, so entstehen zunehmend viskosere Produkte. Bei der Herstellung von Polyurethan-Prepolymeren für Lacke wird der Fachmann das Einsatzverhältnis und damit die Viskosität so wählen, daß Lacke mit 30 - 40 Gew.-% des Polyurethan-Prepolymeren noch durch Spritzen verarbeitet werden können. Ein günstiges Verhältnis OH zu NCO liegt daher zwischen 1: 1,3 und 1: 1,8. Zur Herstellung der Polyurethan-Prepolymeren sind in erster Linie Diisocyanate geeignet. Verwendet werden können ein- und mehrkernige aromatische Diisocyanate, cyclische aliphatische Diisocyanate oder lineare aliphatische Diisocyanate. So können beispielsweise Diphenylmethandiisocyanat, höher kondensiertes (technisches) Diphenylmethandiiscsyanat (Funktionalität 2,3), Toluylendiisocyanat, Isofurondiisocyanat, Dicyclohexylmethandiisocyanat, Tetramethylendiisocyanat oder Hexamethylendiisocyanat verwendet werden. Als mehrfunktionelle Alkoholkomponenten können difunktionelle Alkohole wie beispielsweise Ethylenglykol, Propylenglykol, Neopentylglykol, 1,4-Butandiol, 1,6-Hexandiol eingesetzt werden. Weiter können trifunktionelle Alkohole verwendet oder zumindest in Mengen bis zu 50 Gew.-%, bezogen auf das Gesamtgewicht der mehrfunktionellen Alkohole mitverwendet werden. Geeignete trifunktionelle Alkohole sind Glycerin, Trimethylolethan, Trimethylolpropan. Besonders geeignete difunktionelle Alkohole sind die Kondensationsprodukte der vorgenannten Verbindungen. So ist beispielsweise Polypropylenglykol mit durchschnittlichen Molgewichten von ca. 100 - 10 000, vorzugsweise von 800 bis 2500, ein geeignetes Diol. Weitere geeignete Diole sind Polyethylenoxide im gleichen Molekulargewichtsbereich sowie Polymere des Tetrahydrofuran mit einem Molekulargewicht bis 5000.

Außer den Genannten sind dem Fachmann auf dem Polyurethanlackgebiet noch zahlreiche andere Polyole bekannt. So können beispielsweise in der Natur vorkommende Polyole wie Rizinusöl eingesetzt werden. Eingesetzt werden können auch die Ringöffnungsprodukte äthoxylierter Triglyceride mit mono- oder mehrfunktionellen Alkoholen.

Zum Härtungsmechanismus der erfindungsgemäßen Lacke ist zu sagen, daß hier Feuchtigkeitshärtung vorliegt, d.h. eindiffundierender Wasserdampf hydrolysiert einzelne Isocyanatgruppen, die dann mit weiteren Isocyanatgruppen unter Ausbildung von Harnstoffgruppen reagieren.

Die erfindungsgemäßen Polyurethanlacke enthalten weiterhin Lösungsmittel. Die Verwendung von Lösungsmittel begünstigt insbesondere die Verarbeitung. So muß, wenn der Lack gespritzt werden soll, über die Lösungsmittelmenge eine bestimmte Viskosität eingestellt werden. Geeignet sind hier organische Lösungsmittel, die nicht mit freien Isocyanatgruppen reagieren, d.h. Kohlenwasserstoffe, Ketone oder chlorierte Kohlenwasserstoffe. Bei der Auswahl des Lösungsmittels ist lediglich darauf zu achten, daß der als Abstandshalter beigegebene Feststoff nicht gelöst oder gequollen wird. Besonders geeignete Lösungsmittel sind beispielsweise Xylol, Toluol, Methylisobutylketon oder auch Ethylenglykolacetat.

Die erfindungsgemäßen Lacke können darüber hinaus noch weitere Hilfsstoffe enthalten. So können beispielsweise Verzögerer, Beschleuniger, Stabilisatoren oder Pigmente, vor allen Dingen Rußpigmente eingearbeitet werden. Diese Hilfsstoffe sind dem Fachmann bekannt und in der Literatur auf dem Polyurethanlackgebiet beschrieben. Um blasenfreie Lackschichten zu erhalten, werden darüber hinaus auch häufig Substanzen eingesetzt, die ein Aufschäumen verhindern. Auch hier sei auf das allgemeine Fachwissen auf dem Polyurethanlackgebiet verwiesen.

Die Erfindung ermöglicht das polare wie auch unpolare Elastomere haftfest und dauerhaft zu lackieren.

Werden in den erfindungsgemäßen Lacken Festkörper als Abstandshalter mitverwendet, so gestattet es die Erfindung darüber hinaus unterschiedliche Elastomere mit günstigen Gleiteigenschaften auszustatten

So liegt ein Vorteil darin, daß nicht nur die üblichen polaren Elastomere, z. B. solche mit Nitrilgruppen, sondern auch die ständig an Bedeutung gewinnenden unpolaren Elastomere, wie Terpolymere auf Basis Ethylenpropylendien (EPDM) oder auch Styrolbutadien-Elastomere mit der die Abstandshalter tragende Lackschicht ausgerüstet werden können. In jedem Fall wurde gute Haftung von Lacken und den darin eingebetteten PVC-Teilchen festgestellt. Darüber hinaus erwiesen sich die lackierten Elastomerteile als unempfindlich gegenüber Feuchtigkeit.

Zur Herstellung der erfindungsgemäßen Lacke werden durch Umsetzung von mehrfunktionellen Alkoholen mit einem Überschuß an der Isocyanatkomponente zunächst die Prepolymeren hergestellt. Nach Verdünnen mit Lösungsmittel werden daraufhin die mehrfunktionellen aromatischen Nitrosoverbindungen zugegeben. In den so hergestellten Grundlack können dann die Festkörper (Gleitfähigkeitsverbesserer) eingearbeitet werden. Das Dispergieren der Festkörper im Lack kann vorteilhaft mit Hilfe eines schnell laufenden Rührwerks ausgeführt werden. Besonders günstig lassen sich auf diesem Wege PVC-Kugeln in den Lack einarbeiten. Um ein Absetzen der Gleitverbesserer zu verhindern, können Dispergatoren zugegeben werden oder es kann durch Rühren das Absetzen verhindert werden. Im allgemeinen neigen jedoch PVC-Kugeln beispielsweise nicht zum Absetzen oder Aufschlämmen in Lacken.

Die erfindungsgemäßen Lacke können in üblicher Weise durch Spritzen verarbeitet werden. Als Gleitlacke bieten sie dabei besondere Vorteile gegenüber dem bisher verwendeten Verfahren der elektrostatischen Beflockung von Gummiprofilen.

**Vergleichsbeispiel**

Aus den folgenden Komponenten wurde ein 1-Komponenten-Polyurethanlack hergestellt (Angaben in Gew-Teilen):

40,1 Gew.-T. Polypropylenglykol, Molekulargewicht 1025, OH-Z 109,6
238,0 Gew.-T. Polypropylenglykol, Molekulargewicht 2025, OH-Z 55,4
21,1 Gew-T- Trimethylolpropan
5,0 Gew.-T. Ralox® BT (2.6 t-Butyl-4-methylphenol Fa. Raschig)
195,8 Gew.-T. Diphenylmethandiisocyanat (Desmodur® 44, Bayer AG)
125,0 Gew.-T. Xylol
125,0 Gew.-T. Toluol
220,0 Gew.-T. Methylisobutylketon (MIBK)
30,0 Gew.-T. Ethylenglykolacetat (EGA)
1000,0 Gew.-T.

In einem Reaktor wurden die Polypropylenglykole, die Lösungsmittel Toluol und Xylol sowie Trimethylolpropan und der Hilfsstoff Ralox® BT eingewogen. Bei vermindertem Druck (500 torr) wurde das Gemisch azeotrop entwässert bis der Wassergehalt ca. 100 ppm betrug. Nach dem Abkühlen auf ca. 60° C wurden MIBK, EGA und das Diisocyanat zugesetzt. Es wurde sodann auf 90° C aufgeheizt und 3,5 Stunden bei dieser Temperatur gerührt. Danach wurde bei 50°C über Filter abgelassen.

Es wurden sodann 30 g kugeliges PVC-Pulver (Geon® 221 Fa. BF Goodrich) zugesetzt und mit Hilfe einer Perl-Mill dispergiert. Mit dem so hergestellten Lack wurden Gummiplatten im Spritzauftrag beschichtet (Spritzpistole: Walther Pilot III Düse 1,0 mm bzw. 1,5 mm, Spritzdruck: 3 bar). Die Trocknung des Lackes erfolgte bei 80°C während 10 min.

Der Lack wurde auf Elastomerprofile auf Basis Ethylenpropylendien (EPDM) bzw. Styrolbutadien (SBR) aufgetragen. Die Elastomerteile waren zuvor aus den nachstehend benannten Kautschukmischungen nach üblichen Vulkanisationstechniken hergestellt worden.

## Kautschukmischungen

| Mischungsbestandteile | EPDM | SBR |
|---|---|---|
| Keltan 812® | 100,0 Teile | — |
| Buna Hüls 1500® | | 100 Teile |
| ZnO RS | 5,0 " | 5 " |
| Stearinsäure | 2,0 " | 1 " |
| FEF | 90,0 " | |
| Sillitin N® | 55,0 " | — |
| Corax 3® | | 50 " |
| Sunpar 2280® | 70,0 " | — |
| Caloxol® | 6,0 " | |
| Paraflux® | | 8 " |
| Vaseline | 5,0 " | |
| Merkapto 80%® | 1,25 " | — |
| Santogard PVI® | 2,0 " | 0,2 " |
| DPTT 75%® | 1,0 " | |
| P extra N 80%® | 1,0 " | — |
| Royalac 133® | 0,3 " | — |
| Pennzone B® | | |
| Vulkacit CZ® | 1,0 " | 0,95 " |
| Sulfasan R® | | 1,6 " |
| Schwefel | | |

**0 151 713**

In einem weiteren Versuch wurden Kautschukprofile hergestellt, mit dem PVC-Teile enthaltenden Lack beschichtet und im Heißluftkanal unter gleichzeitiger Aushärtung des Lackes vulkanisiert.

In beiden Fällen wurden Gleiteigenschaften ermittelt, die denen beflockter Gummiteile entsprachen.

Dem Polyurethanlack des Vergleichsbeispiels wurde 1,4-Dinitrosobenzol in folgenden Mengen zugesetzt:

1 % (Beispiel A)

2 % (Beispiel B)

Die Aushärtung des Lackes erfolgte im Heißluftschrank bei 90°C während 15 Minuten. Nach ca. 24-stündiger Lagerung der lackierten Teile bei Raumtemperatur wurde die Haftung nach DIN 53151 durch Gitterschnitt ermittelt. Diese Prüfung wurde nach der Lagerung der Teile 240 Stunden bei 40°C, 100 %iger Luftfeuchtigkeit (SWP) sowie 240 Stunden bei 90°C wiederholt. Die Ergebnisse der Versuche sind in der nachstehenden Tabelle aufgeführt.

| Lack | Gitterschnitt-Haftung | Haftung nach SWP | Haftung nach Heißluftalterung |
|---|---|---|---|
| A | sehr gut | gut | sehr gut |
| B | sehr gut | sehr gut | sehr gut |
| Vergleichs-beispiel | gut | mangelhaft | befriedigend |

**Patentansprüche**

1. Feuchtigkeitshärtende 1-Komponenten-Polyurethanlacke zur Beschichtung von Elastomeren, bestehend aus
- mehrfunktionellen Isocyanatverbindungen
- Lösungsmitteln
- Hilfsstoffen und
- gewünschtenfalls Gleitfähigkeitsverbesserern,
dadurch gekennzeichnet, daß als Haftverbesserer mehrfunktionelle aromatische Nitrosoverbindungen enthalten sind.

2. Polyurethanlacke nach Anspruch 1, dadurch gekennzeichnet, daß als Haftverbesserer Dinitrosoverbindungen ein- oder mehrkerniger, gewünschtenfalls substituierter Aromaten mit mindestens zwei Nitrosogruppen an nicht benachbarten C-Atomen enthalten sind.

3. Polyurethanlacke nach den Ansprüchen 1 und 2, dadurch gekennzeichnet, daß die mehrfunktionellen aromatischen Nitrosoverbindungen in Mengen von 0,5-4, vorzugsweise 1 - 2,5 Gew.-%, bezogen auf die lösungsmittelfreien Bestandteile des Lackes enthalten sind.

4. Polyurethanlacke nach den Ansprüchen 1 - 3, dadurch gekennzeichnet, daß als Haftverbesserer 1,4-Dinitrosobenzol enthalten ist.

5. Polyurethanlacke nach den Ansprüchen 1 - 4, dadurch gekennzeichnet, daß als mehrfunktionelle Isocyanatverbindungen Polyurethan-Prepolymere mit im Mittel 2 oder mehr, vorwiegend endständigen Isocyanatgruppen enthalten sind.

6. Polyurethanlacke nach den Ansprüchen 1 - 5, dadurch gekennzeichnet, daß als mehrfunktionelle Isocyanatverbindung ein Polyurethan-Prepolymer auf Basis aliphatischer und/oder aromatischer Diisocyanate und aliphatischer di- und/oder trifunktioneller Alkohole und/oder Etheralkohole enthalten ist.

7. Polyurethanlacke nach den Ansprüchen 1 - 6, dadurch gekennzeichnet, daß als Gleitfähigkeitsverbesserer

6

Festkörper eines mittleren Durchmessers von 30-200 μm, vorzugsweise 30 - 150 μm und bevorzugt kugeliger Gestalt enthalten sind.

8. Polyurethanlacke nach den Ansprüchen 1 und 7, dadurch gekennzeichnet, daß als Gleitfähigkeitsverbesserer Kugeln aus Kunststoff, insbesondere aus Polyolefinen, wie Polyethylen, Polypropylen, Polystyrol, Polyacrylaten wie Polymethylmethacrylat, chlorierten Polymeren wie Polyvinylchlorid, anorganischen Gläsern, Mineralien und/oder Metallen enthalten sind.

9. Polyurethanlacke nach den Ansprüchen 1 - 8, dadurch gekennzeichnet, daß als weitere Hilfsstoffe Pigmente, Beschleuniger und/oder Substanzen zur Verhinderung der Blasenbildung enthalten sind.

10. Verwendung der Polyurethanlacke nach den Ansprüchen 1 - 9 zur Beschichtung von Elastomeren, insbesondere unpolaren Elastomeren wie Styrol-Butadien-Gummi oder Elastomeren auf Basis von Polyethylenpropylen-dienen (EPDM).

## Claims

1. Moisture-hardening 1-component polyurethane lacquers for coating elastomers, consisting of
- polyfunctional isocyanate compounds
- solvents
- auxiliaries and,
- if desired, slip promoters,
characterized in that they contain polyfunctional aromatic nitroso compounds as adhesion promoters.

2. Polyurethane lacquers as claimed in Claim 1, characterized in that they contain as adhesion promoters dinitroso compounds of mono- or polynuclear, optionally substituted aromatic compounds containing at least two nitroso groups at non-adjacent C-atoms.

3. Polyurethane lacquers as claimed in Claims 1 and 2, characterized in that the polyfunctional aromatic nitroso compounds are present in quantities of from 1 to 2.5 % by weight, based on the solvent-free constituents of the lacquer.

4. Polyurethane lacquers as claimed in Claims 1 to 3, characterized in that they contain 1,4-dinitrosobenzene as adhesion promoter.

5. Polyurethane lacquers as claimed in Claims 1 to 4, characterized in that they contain polyurethane prepolymers containing on average two or more, predominantly terminal isocyanate groups as polyfunctional isocyanate compounds.

6. Polyurethane lacquers as claimed in Claims 1 to 5, characterized in that they contain a polyurethane-prepolymer based on aliphatic and/or aromatic diisocyanates and aliphatic di- and/or trifunctional alcohols and/or ether alcohols as the polyfunctional isocyanate compound.

7. Polyurethane lacquers as claimed in Claims 1 to 6, characterized in that preferably spherical solids having a mean diameter of from 30 to 200 μm and preferably of from 30 to 150 μm are present as the slip promoters.

8. Polyurethane lacquers as claimed in Claims 1 and 7, characterised in that they contain as slip promoters spheres of plastics, more especially polyolefins, such as polyethylene, polypropylene, polystyrene, polyacrylates, such as polymethyl methacrylate, chlorinated polymers, such as polyvinyl chloride, inorganic glasses, minerals and/or metals.

9. Polyurethane lacquers as claimed in Claims 1 to 8, characterized in that pigments, accelerators and/or substances for preventing bubble formation are present as further auxiliaries.

10. The use of the polyurethane lacquers claimed in Claims 1 to 9 for coating elastomers, more especially apolar elastomers, such as styrene-butadiene rubber, or elastomers based on polyethylene propylene dienes (EPDM).

## Revendications

1. Vernis de polyuréthanes à un composant durcissant en présence d'humidité pour l'enduction d'élastomères, ces vernis comprenant:
- des composés isocyanate polyfonctionnels,
- des solvants,
- des substances auxiliaires et
- éventuellement des additifs améliorant l'aptitude au glissement,
caractérisés en ce que, comme additifs améliorant l'adhérence, ils contiennent des nitroso-composés aromatiques polyfonctionnels.

2. Vernis de polyuréthanes selon la revendication 1, caractérisés en ce que, comme additifs améliorant l'adhérence, ils contiennent des dinitroso-composés d'hydrocarbures aromatiques à un ou plusieurs noyaux, éventuellement substitués et comportant au moins deux groupes nitroso sur des atomes de carbone non voisins.

3. Vernis de polyuréthanes selon les revendications 1 et 2, caractérisés en ce qu'ils contiennent les nitroso-

## 0 151 713

composés aromatiques polyfonctionnels en quantités de 0,5-4, de préférence, de 1-2,5 % en poids, rapporté aux constituants exempts de solvants du vernis.

4. Vernis de polyuréthanes selon les revendications 1 à 3, charactérisés en ce que, comme additif améliorant l'adhérence, ils contiennent le 1,4-dinitrosobenzène.

5. Vernis de polyuréthanes selon les revendications 1 à 4, caractérisés en ce que, comme composés isocyanate polyfonctionnels, ils contiennent des prépolymères de polyuréthanes comportant, en moyenne, 2 groupes isocyanate principalement terminaux ou plus.

6. Vernis de polyuréthanes selon les revendications 1 à 5, caractérisés en ce que, comme composé isocyanate polyfonctionnel, ils contiennent un prépolymère de polyuréthane à base de diisocyanates aliphatiques et/ou aromatiques et d'éther-alcools et/ou d'alcools aliphatiques difonctionnels et/ou trifonctionnels.

7. Vernis de polyuréthanes selon les revendications 1 à 6, caractérisés en ce que, comme additifs améliorant l'aptitude au glissement, ils contiennent des corps solides d'un diamètre moyen de 30-200 μm, de préférence, de 30-150 μm et ayant de préférence, une configuration sphérique.

8. Vernis de polyuréthanes selon les revendications 1 et 7, caractérisés en ce que, comme additifs améliorant l'aptitude au glissement, ils contiennent des sphères en matière synthétique, en particulier, en polyoléfines telles que le polyéthylène, le polypropylène et le polystyrène, en polyacrylates tels que le méthacrylate de polyméthyle, en polymères chlorés tels que le chlorure de polyvinyle, en verres inorganiques, en matières minérales et/ou en métaux.

9. Vernis de polyuréthanes selon les revendications 1 à 8, caractérisés en ce que, comme substances auxiliaires supplémentaires, ils contiennent des pigments, des accélérateurs et/ou des substances en vue d'empêcher la formation de soufflures.

10. Utilisation des vernis de polyuréthanes selon les revendications 1 à 9 pour l'enduction d'élastomères, en particulier, d'élastomères non polaires tels que le caoutchouc de styrène-butadiène, ou en élastomères à base de poly-éthylène-propylène-diènes.

8